# FASCICULE DE BREVET EUROPEEN

(11) **EP 1 737 755 B1**
(45) Date de publication et mention de la délivrance du brevet: **13.02.2008**
(21) Numéro de dépôt: 05757273.7
(22) Date de dépôt: 14.04.2005
(51) Int. Cl.: B65D 81/30, B65D 65/20, B65D 1/02

(54) **ARTICLES D'EMBALLAGE TELS QUE BOUTEILLES OPAQUES ET PROCEDE DE FABRICATION DE CES ARTICLES**
ARTIKELVERPACKUNGEN WIE LICHTUNDURCHLÄSSIGE FLASCHEN UND VERFAHREN ZU DEREN HERSTELLUNG
PACKAGING ARTICLES, SUCH AS OPAQUE BOTTLES, AND PRODUCTION METHOD THEREOF

(30) Priorité: 15.04.2004 FR 0403928
(43) Date de publication de la demande: 03.01.2007
(73) Titulaire: Tergal Industries, 02430 Gauchy (FR)
(72) Inventeur: LEPAGE, Jean-Luc, 69340 Francheville (FR)
(74) Mandataire: Casalonga, Axel
(86) Numéro de dépôt international: PCT/FR2005/000900
(87) Numéro de publication internationale: WO 2005/102865

(56) Documents cités:
- EP-A- 0 475 110
- EP-A- 1 541 623
- WO-A-95/03217
- WO-A-03/007277
- CN-A- 1 389 345
- ES-A- 8 207 042
- FR-A- 1 591 905
- JP-A- 11 254 622
- JP-A- 2003 301 094
- KR-A- 900 006 335
- US-A- 3 784 661
- US-A- 4 594 211
- PATENT ABSTRACTS OF JAPAN vol. 0100, no. 40 (M-454), 18 février 1986 (1986-02-18) -& JP 60 193630 A (SUMIKA KARAA KK; others: 01), 2 octobre 1985 (1985-10-02)

## Description

La présente invention concerne des articles notamment d'emballages opaques tels que des bouteilles permettant le stockage à l'abri des rayonnements visibles et UV de certains produits tels que le lait.

Elle concerne plus particulièrement une bouteille opaque obtenue par injection soufflage d'une composition à base de polyester et un procédé de fabrication des articles d'emballage, notamment d'une bouteille.

Les bouteilles en matières thermoplastiques et plus particulièrement en polyester tel que le polyéthylène téréphtalate sont de plus en plus utilisées pour le stockage de liquides divers et variés, notamment de denrées alimentaires liquides comme l'eau, la bière, des boissons sucrés gazeuses ou non généralement appelées Soda. Elles sont également utilisées pour le stockage du lait et d'autres matières alimentaires solides ou liquides.

Toutefois, le lait peut se présenter sous différentes formes, selon le procédé de traitement appliqué, permettant une conservation pendant des durées plus ou moins longues. Ainsi, les laits crus, stérilisés doivent être utilisés très rapidement après leur mise en bouteille, au contraire, le lait UHT (ultra haute température) peut être conservé plusieurs mois après sa mise en bouteille.

Cette durée de conservation très longue impose des contraintes pour le récipient de stockage tel que bouteille ou boite.

En effet, le goût du lait évolue sous l'effet des rayonnements U.V. et/ou visibles. Un lait présentant un goût altéré par ce phénomène est qualifié comme "avoir un goût lumière".

Cette évolution est notamment due à la dégradation de la vitamine B2 (Riboflavine) du lait sous l'effet d'une exposition lumineuse. En effet, la dégradation de cette vitamine dans le lait varie suivant l'intensité de la source lumineuse, de la durée d'exposition et également du domaine de longueurs d'onde de la source lumineuse.

Les rayonnements de longueurs d'ondes comprises entre 350 et 520 nm semblent être responsables de la dégradation de cette vitamine et donc de l'altération du goût du lait.

En conséquence, les contenants de stockage ou les emballages de ces contenants doivent présenter une transmission de la lumière très faible voire nulle pour les rayonnements de longueurs d'onde inférieure à 550 nm et plus généralement pour les rayons U. V. et le rayonnement visible. Cette spécification est d'autant plus importante que la durée de stockage du lait est longue.

Cette contrainte est très importante pour les laits de longue conservation tels que les laits UHT (Ultra Haute Température Traitement), ainsi que pour certains laits vitaminés sensibles aux rayonnements ou pour des produits laitiers dérivés tels que yaourt, crèmes ou analogues.

Des solutions pour la réalisation de contenants compatibles pour le stockage longue durée du lait ont déjà été proposées et sont largement utilisées.

Un des plus utilisés est la boîte ou brique en carton comprenant de nombreuses couches permettant d'obtenir une transmission de la lumière nulle pour le domaine de longueurs d'onde UV et visible.

Toutefois, les systèmes de fermeture de ces boites, notamment après une première utilisation ne sont pas pratiques et ne garantissent pas une fermeture efficace.

Pour remédier aux inconvénients de ces boites, tel que la rigidité, l'espace mort, la forme, la taille la maniabilité, il a été proposé des bouteilles notamment des bouteilles en polyéthylène haute densité (PEHD).

Néanmoins, pour obtenir un niveau de transmission de la lumière faible, ces bouteilles sont formées par des parois multicouches pouvant comprendre de trois à six couches réalisées en matières différentes.

Les couches externes contiennent généralement un pigment blanc constitué par de l'oxyde de titane pour donner un aspect esthétique compatible avec le produit stocké.

Comme couche intermédiaire, une couche à transmission faible de la lumière est présente. Cette couche comprend généralement un noir de carbone comme charge absorbante de la lumière. Enfin, une couche barrière à l'oxygène peut également être présente ainsi que des couches d'adhésifs pour obtenir une bonne stabilité de la structure.

Ces bouteilles requièrent des procédés de fabrication complexes. En outre, leur récupération et recyclabilité sont difficiles en mettre en oeuvre compte tenu de la présence de plusieurs matières différentes.

FR 1 591 905 A divulgue un récipient en PEHD comprenant de l'oxyde de titane.

WO 03/076277 A divulgue un récipient en polyester comprenant de l'oxyde de titane et du mica.

L'invention a notamment pour but de remédier à ces inconvénients en proposant un nouveau procédé pour la fabrication de contenants ou articles notamment d'emballage présentant une transmission très faible de la lumière notamment dans le domaine des longueurs d'onde comprises entre 350 et 550 nm et plus généralement pour le rayonnement U. V. et le rayonnement visible. De tels articles peuvent être fabriqués par des procédés simples, déjà utilisés pour la fabrication de contenants classiques et présentent également l'avantage de pouvoir être recyclés facilement pour un même usage car ils sont obtenus à partir d'une seule matière et leur recyclage ne dégrade pas les propriétés intrinsèques du matériau.

A cet effet, l'invention propose un procédé de fabrication d'articles notamment pour l'emballage de produits tels que des denrées alimentaires par mise en forme d'une composition comprenant une matière thermoplastique en polyester ou polylactone et une seule charge minérale opacifiante formant un pigment blanc constituée par de l'oxyde de titane ou du sulfure de zinc, ou un mélange de charges minérales opacifiantes formant un pigment blanc constitué par de l'oxyde de titane et du sulfure de zinc, à une concentration pondérale comprise entre 4 % et 40 % par rapport au poids total de la composition, préférentiellement entre 4 et 20 %.

Comme articles pour l'emballage, on entend des films souples obtenus par extrusion, des boites ou conteneurs obtenus par injection moulage, et plus particulièrement des corps creux tels que des bouteilles obtenus par injection soufflage.

Selon l'invention, les articles sont formés par une seule couche obtenue à partir d'une composition telle que définie ci-dessus.

Selon une caractéristique préférentielle de l'invention, les articles obtenus selon le procédé de l'invention présentant un taux de transmission de la lumière inférieur à 0,25 % pour des longueurs d'onde comprises entre 350 et 550 nm, notamment entre 400 nm et 550 nm et préférentiellement inférieur à 0,1 % dans ce domaine de longueurs d'onde.

Par taux de transmission de la lumière, on entend le rapport entre l'intensité lumineuse du rayonnement sortant de la paroi et l'intensité lumineuse du rayonnement incident appliqué sur la paroi. La mesure de ces intensités est effectuée sur le rayonnement selon une direction perpendiculaire à la surface de la paroi. Ainsi la transmission mesurée dans la présente invention est appelée 'la transmission normale' ou 'taux de transmission normale'.

Ce taux de transmission est fonction de la nature de la charge, de la concentration de celle-ci ainsi que de l'épaisseur de la paroi de l'article.

Ainsi, les articles obtenus par le procédé de l'invention présentent un taux de transmission normale inférieur à 0,25 % pour des épaisseurs de paroi comprises entre 0,2 et 0,6 mm. Avantageusement, le taux de transmission normale est inférieur à 0,20 %, de préférence inférieur à 0,1 %.

Selon l'invention, la charge minérale est un pigment blanc tels que les oxydes de titane sous forme rutile et/ou anatase. Ces oxydes de titane sont sous forme de particules de dimensions variables, avantageusement comprises entre 0,2 µm et 1 µm.

Ces particules peuvent être de l'oxyde de titane pur ou peuvent comprendre un noyau en oxyde de titane et un revêtement protecteur. Ce revêtement protecteur qui peut être constitué par une ou plusieurs couches d'oxydes de différents métaux et/ou de composés organiques permet de diminuer voire supprimer l'interaction entre l'oxyde de titane et le polymère formant la matrice de la composition. En effet, les charges convenables pour l'invention doivent présenter des propriétés et caractéristiques permettant de supprimer ou éviter toute action qui pourrait nuire au procédé de fabrication du polyester ou à ses propriétés.

Selon l'invention, une autre charge minérale formant un pigment blanc à savoir du sulfure de zinc permet d'obtenir des compositions convenables pour la fabrication d'articles notamment d'emballage présentant une opacification à la lumière convenable pour une concentration en charge compatible avec les procédés de mise en forme de la composition et sa fabrication.

Selon une autre caractéristique de l'invention, les procédés de mise en forme de la composition conforme à l'invention sont des procédés classiquement utilisés pour la mise en forme des polyesters et la réalisation d'articles de formes et dimensions variées.

Les articles obtenus selon le procédé de l'invention peuvent être des films, pièces moulées, des profilés ou des corps creux fabriqués par utilisation des procédés classiques tels que injection-moulage, extrusion, pultrusion ou injection-soufflage.

Les procédés d'injection soufflage mis en oeuvre pour la fabrication des bouteilles en polyester utilisées notamment pour le stockage de l'eau ou des sodas sont convenables pour la réalisation des bouteilles à partir d'une composition conforme à l'invention comprenant une charge minérale.

Les réglages des conditions d'injection et de soufflage sont usuelles pour un homme du métier et comparables à celles nécessaires pour adapter le procédé d'injection-soufflage à un polyester classique.

Les articles obtenus, notamment les bouteilles, sont formés par une seule couche de matériau et présentent un aspect esthétique convenable notamment pour le stockage du lait ou des produits laitiers.

Les propriétés de très faible transmission de la lumière des parois de la bouteille permettent l'utilisation d'une telle bouteille pour le stockage du lait ou des produits laitiers pendant une durée très longue, de plusieurs mois, sans constater une altération du goût de celui-ci. En conséquence, cette bouteille est convenable pour l'embouteillage des laits de longue conservation ou des laits sensibles à la lumière comme les laits UHT, les laits vitaminés ou d'autres produits sensibles à l'effet de la lumière.

Par ailleurs, l'utilisation comme matière plastique d'un polyester ou d'un polylactone permet d'obtenir des articles d'emballage, notamment des bouteilles présentant des bonnes propriétés mécaniques et pouvant être aisément recyclés.

De manière générale, les articles obtenus selon le procédé de l'invention, c'est à dire avec une composition polyester ou polylactone comprenant une charge minérale choisie parmi les oxydes de titane ou le sulfure de zinc sont particulièrement convenables pour le stockage de produits sensibles à l'effet de la lumière.

En outre, ces articles présentent une meilleure résistance au vieillissement car la charge minérale en réflichissant une grande partie des rayons lumineux et en absorbant les rayons UV protège le polyester notamment au coeur de la paroi et sur la surface non exposée contre l'effet du rayonnement lumineux. Cet effet est notamment important dans le cas des articles de forte épaisseur comme les profilés, par exemple.

Selon l'invention, par polyester on entend une résine polyester choisie parmi le polyéthylène téréphtalate, le polyéthylène naphtalate, les copolymères de polyethylène téréphtalate ou polyéthylène naphtalate pouvant contenir au moins un composé ou des unités récurrentes retardateur de cristallisation.

Dans la suite du présent texte le terme polyethylène téréphtalate ou PET sera utilisé. Toutefois, les caractéristiques, procédés ou utilisations décrits pour ce polymère s'applique également au polyéthylène naphtalate.

Dans un mode de réalisation préféré de l'invention, la résine polyester est obtenue à partir de l'éthylène glycol et de l'acide téréphtalique ou ses esters. Ces résines sont souvent désignées sous le sigle PET.

Par résine polyester ou PET, on désigne aussi bien un homopolymère obtenu uniquement à partir de monomères acide téréphtalique ou ses esters comme le diméthyltéréphtalate et éthylène glycol que des copolymères comprenant au moins 92,5% en nombre d'unités récurrentes d'éthylène téréphtalate. De tels polymères sont préférés de l'invention.

Le polyester peut également comprendre au moins un retardateur de cristallisation permettant, notamment au cours du refroidissement de l'article moulé ou injecté tel qu'une préforme, de ralentir ou retarder la cristallisation du polyester pour ainsi obtenir une cristallisation en cristaux de taille très petite en évitant la cristallisation sphérolitique et de pouvoir fabriquer un article avec des propriétés mécaniques acceptables. De tels propriétés peuvent être intéressantes dans certaines applications.

Ces agents retardateurs de cristallisation sont des composés difonctionnels tels que des diacides et/ou diols ajoutés au mélange de monomères avant ou au cours de la polymérisation du polyester.

Comme agent retardateur de cristallisation, on peut citer à titre d'exemples de diacides, l'acide isophtalique, l'acide naphtalènedicarboxylique, l'acide cyclohexane dicarboxylique, l'acide cyclohexane diacétique, l'acide succinique, l'acide glutarique, l'acide adipique, l'acide azélaïque, l'acide sébacique et à tires d'exemples de diols, on peut citer les diols aliphatiques comprenant de 3 à 20 atomes de carbone, les diols cycloaliphatiques de 6 à 20 atomes de carbone, les diols aromatiques comprenant de 6 à 14 atomes de carbone et leurs mélanges comme le di-éthylène glycol, le tri-éthylène glycol, les isomères du 1, 4-cyclohexane di-méthanol, le 1, 3-propane diol, le 1, 4-butane diol, le 1, 5-pentane diol, le (2, 4)-3méthylpentanediol, (1-4), 2 méthylpentanediol, (1, 3)2, 2, 4-triméthylpentanediol, (1, 3)-2éthylhexanediol, (1, 3)-2, 2-diéthylpropanediol, 1, 3-hexanediol, 1, 4-di(hydroxyéthoxy)benzène, 2, 2-bis(4-hydroxycyclohexyl)propane, 2, 4 dihydroxy-1, 1, 3, 3-tétraméthylcyclobutane, 2, 2-bis(3-hydroxyéthoxyphényl)propane, 2, 2-bis (4-hydroxypropoxyphényl) propane et leurs mélanges.

Le diéthylène glycol est souvent présent dans les polyesters de manière inhérente car il se forme pendant la synthèse par condensation de deux molécules d'éthylène glycol. Selon la concentration désirée en unités récurrentes comprenant un reste de diéthylène glycol (DEG) dans le polyester final, soit du diéthylène glycol est ajouté aux mélanges de monomères, soit les conditions de synthèse du polyester sont contrôlées pour limiter la formation de diéthylène glycol.

Avantageusement, la concentration molaire en diéthylène glycol dans le polyester par rapport au nombre de moles de monomères diacides est inférieure à 3,5 %, de préférence inférieure à 2% molaire.

Les résines polyesters utilisées pour l'invention présentent un indice de viscosité IV pouvant être compris dans un domaine très large, avantageusement entre 0,5 dl/g et 1, 2 dl/g, de préférence entre 0, 6 dl/g et 1 dl/g.

L'indice de viscosité IV est mesuré sur une solution de polymère à 0,5 g de polymère /100 ml d'un solvant constitué d'orthodichlorobenzène et de phénol (50/50 en poids) à 25°C, selon la norme ISO 1628/5 du 15/06/1986. La solution de polymère est obtenue en prenant en compte le poids de la charge pour obtenir une concentration de 0,5 g de polymère, charge déduite.

L'indice de viscosité est généralement déterminé par analyse des granulés de polymère obtenus en fin de fabrication du polymère.

Dans le cas d'utilisation des compositions thermoplastiques de l'invention pour la réalisation de corps creux ou bouteilles, cet indice de viscosité IV peut être mesuré à partir du polymère constituant les parois de la bouteille

Pour effectuer cette mesure, un morceau de la bouteille est découpé puis coupé en petits morceaux pour permettre leur solubilisation.

Généralement, l'indice de viscosité du polyester est peu affecté au cours du procédé de fabrication du corps creux. Toutefois, l'indice de viscosité mesuré à partir de la paroi de la bouteille peut être inférieur ou supérieur à celui mesuré à partir des granulés alimentés dans l'étape d'injection. La valeur mesurée à partir des granulés est généralement très voisine de celle déterminée à partir de la bouteille.

Ces considérations sont également applicables pour l'indice de viscosité mesuré à partir du polyester formant les parois de la préforme obtenue après l'étape d'injection.

La composition thermoplastique de l'invention peut contenir d'autres composants tels que colorants, azurants, agents de protection contre la lumière et la chaleur, antioxydants, piégeur d'acétaldéhyde, par exemple. Cette liste est donnée uniquement à titre indicatif et n'est pas limitative.

Selon l'invention, la composition est fabriquée selon les procédés conventionnels de fabrication de polyesters. Dans un mode de réalisation préféré, la charge minérale ou pigment blanc est ajouté en début de polymérisation, dans le milieu contenant les monomères comme cela sera décrit ci-dessous.

Le procédé de l'invention peut également être mis en oeuvre en utilisant comme matière, une composition obtenue par recyclage des articles, par exemple bouteille, obtenues avec une composition similaire. A titre d'exemple, les bouteilles usées et collectées sont broyées en particules de composition de polyester. Ces particules, peuvent être traitées, par exemple lavées et granulées, avant d'être utilisées comme matière première unique ou en mélange avec une composition obtenue selon le procédé ci-dessous, dans un procédé de fabrication de bouteilles par injection moulage et soufflage, par exemple.

Le procédé de fabrication des compositions thermoplastiques de l'invention comprend une première étape d'estérification ou de transestérification en présence ou absence de catalyseur. L'hydrolysat ou l'estérifiat obtenu est ensuite polycondensé sous pression réduite en présence de catalyseurs tels que des composés d'antimoine, de titane ou de germanium, par exemple. Dans cette étape, de l'alcool ou de l'eau sont éliminés pour permettre un avancement de la réaction de polycondensation.

Selon l'invention, cette polycondensation est arrêtée quand le degré de polycondensation ou l'indice de viscosité a atteint la valeur désirée.

Le polyester obtenu est coulé dans des filières permettant d'obtenir des joncs qui sont ensuite transformés en granulés par coupe.

Ces granulés peuvent être soumis à un traitement thermique soit pour augmenter la viscosité du polymère (appelé PCS Post Condensation en phase Solide), soit pour diminuer la teneur en acétaldéhyde (séchage et évaporation à une température inférieure à celle d'un PCS)

Selon un autre mode de réalisation de l'invention, pour limiter l'évolution du degré de polycondensation lors du traitement thermique décrit ci-dessus pour abaisser la teneur en acétaldéhyde, le polyester peut comprendre un monomère monofonctionnel, de préférence un monoacide. La teneur molaire en monomère monofonctionnel est comprise entre 0,5% en mole et 3% par rapport au total des monomères diacides.

Les monoacides convenables pour l'invention sont, par exemple l'acide benzoïque, l'acide naphtalènique, les acides aliphatiques présentant un point d'ébullition compatible avec le procédé de synthèse du polyester c'est-à-dire, avantageusement, au moins supérieur à celui de l'éthylène glycol ou leurs esters ou des monoalcools comme le cyclohexanol ou des alcools aliphtatiques également présentant avantageusement un point d'ébullition supérieur à celui de l'éthylène glycol.

Il peut être ajouté aux polyesters de l'invention soit à l'étape de polymérisation soit dans le polyester fondu avant injection, différents additifs tels qu'azurants, colorants ou autres additifs stabilisants lumière, chaleur ou des antioxydants, par exemple.

Selon un mode de réalisation préféré, la charge minérale ou pigment blanc est mis en suspension, avantageusement dans un monomère du polyester à fabriquer. Comme monomère préféré pour réaliser cette suspension, on citera les diols utilisés dans la fabrication du polyester comme l'éthylène glycol. Par ailleurs, la dispersion de la charge minérale dans la composition est d'autant meilleure que la dispersion dans le monomère avant l'addition est homogène et que la charge soit dispersée sous forme de très petites particules sans gros agglomérats. Ces dispersions peuvent être réalisées avec tous les moyens connus tels que les agitateurs mécaniques classiques, les ultrasons, les dispositifs de mélange à forte énergie, tel que les homogéniseurs de type Ultra-Turrax

La suspension de pigment blanc est ajoutée, avantageusement, dans le milieu réactionnel à l'étape d'estérification ou de transestérification.

La concentration en pigment blanc dans l'éthylène glycol est telle que la quantité en éthylène glycol utilisée pour cette étape peut représenter entre 20 et 100% de l'éthylène glycol total nécessaire à la synthèse du polymère.

Des additifs peuvent être utilisés pour faciliter cette mise en suspension.

Toutefois, le pigment peut être ajouté directement dans le milieu réactionnel, aux différentes étapes de la polymérisation, estérification, polycondensation, sous forme de poudre, sans pour cela sortir du cadre de l'invention.

II peut aussi être incorporé dans le polymère, sous forme de poudre ou de mélange maître ou solutions concentrées, après synthèse du polymère, directement avant granulation de celui-ci, ou par mélange avec les granulés de polyester avant la fusion pour alimentation dans les procédés de mise en forme tels que injection-moulage ou extrusion. Ce pigment peut également être ajouté directement dans le polymère fondu avant l'alimentation dans les procédés de mise en forme ci-dessus.

L'utilisation de mélange-maître à forte concentration en charge minérale, par exemple supérieure à 30% en poids, est un des modes de réalisation préféré de l'invention. Le mélange maître comprend avantageusement une matrice polymérique également en polyester. Il est obtenu sous forme de granulés et peut être fabriqué selon le procédé de polymérisation décrit ci-dessus ou addition de la poudre de charge minérale dans le polyester à l'état fondu.

Avantageusement, les granulés de mélange-maître sont mélangés avec les granulés de polyester avant introduction dans les dispositifs de mise en forme notamment les moyens de fusion de la composition ou sont dosés dans le flux de granulés polyestr à l'entrée des dispositifs de mise en forme. Les granulés de mélange-maître peuvent également être ajoutés directement dans le polyester à l'état fondu.

Une des utilisations particulières et importantes de ces compositions et qui forme un objet de la présente invention est la fabrication de corps creux tels que bouteilles par la technique d'injection soufflage ou d'articles obtenus par injection moulage.

Dans ces utilisations, la composition thermoplastique conforme à l'invention est produite sous forme de granulés de dimensions plus ou moins variées ou est formée in-situ dans les dispositifs d'alimentation et de fusion des moyens de mise en forme, à partir d'une résine polyester ne comprenant pas de charge minérale avec addition soit à l'état solide soit par alimentation dans la résine déjà fondue de la charge minérale sous forme de poudre ou de mélange-maître, comme décrit ci-dessus.

Les granulés de composition, de résine polyester et/ou de mélange-maître sont avantageusement séchés pour obtenir une teneur en humidité inférieure à 50 ppm, de préférence à 20 ppm. Cette étape de séchage n'est pas obligatoire si la teneur en humidité du polyester est suffisamment faible. Dans certains cas, til peut être avantageux de ne sécher que le polyester et d'introduire le mélange-maître sans séchage.

Les granulés sont ensuite introduits dans des procédés d'injection-soufflage pour la fabrication de contenants creux tels que des bouteilles. Ces procédés décrits dans de nombreuses publications et utilisés industriellement, à grande échelle, comprennent une première étape d'injection pour la fabrication de préformes. Dans une seconde étape, les préformes refroidies ou non sont réchauffées pour être soufflées à la forme des bouteilles désirées, avec éventuellement un bi-étirage.

Les préformes sont obtenues, par exemple, par fusion de la résine dans une presse d'injection à simple ou double vis, permettant également d'obtenir une plastification du polyester et de l'alimenter sous pression dans un distributeur muni de busettes et obturateurs chauffés, par exemple à une température comprise entre 260 °C et 285 °C.

La composition est injectée dans au moins un moule de la préforme puis refroidie pour obtenir une préforme solide. Le moule est muni des moyens de refroidissement adaptés pour contrôler la vitesse de refroidissement de celle-ci et éviter ainsi une cristallisation sphérolitique qui peut nuire à l'étape de soufflage. Un refroidissement rapide est aussi nécessaire pour obtenir des temps de cycle d'injection courts et donc des cadences élevées de production.

Après solidification, la préforme est éjectée et est soit refroidie à température ambiante pour être stockée et dans une étape ultérieure soufflée soit maintenue à une température intermédiaire et introduite directement, sans autre refroidissement dans une installation de soufflage comme décrite ci-dessous.

Dans ce procédé de fabrication des préformes, le polyester est fondu à une température de l'ordre de 280 °C, par exemple comprise entre 270 et 285 °C, puis injecté dans des moules. Avantageusement, la température d'injection la plus basse possible sera utilisée pour limiter la formation d'acétaldéhyde, notamment pour diminuer la vitesse de formation d'acétaldéhyde.

En outre, il est avantageux que les moules soient refroidis à une température comprise entre 0°C et 10°C. Ce refroidissement est obtenu en utilisant tout fluide de refroidissement convenable comme, par exemple, l'eau glycolée.

Avantageusement, le cycle d'injection et refroidissement est de l'ordre de 10 secondes à 1 mn.

Le polyester formant la paroi de la préforme obtenue selon ce procédé présente un indice de viscosité compris entre 0,45 dl/g et 1,2 dl/g, avantageusement entre 0,60 dl/g et 1 dl/g.

Les préformes ainsi obtenues sont généralement utilisées dans des procédés de soufflage pour la fabrication de bouteilles. Ces procédés de soufflage sont également répandus et décrits dans de nombreuses publications.

Ils consistent généralement à introduire la préforme dans une installation de soufflage comportant des moyens de chauffage, avec ou sans sur-étirage.

La préforme est chauffée au moins au-dessus de la Tg (température de transition vitreuse) du polymère puis pré-soufflée par injection d'un gaz sous pression à une première pression pendant une première période.

Une seconde injection d'un gaz à une seconde pression permet d'obtenir la forme finale de la bouteille avant son injection après refroidissement.

De manière avantageuse, la température de chauffage de la préforme est comprise entre 80°C et 105°C. Ce chauffage est réalisé par tout moyen adapté, par exemple par des infrarouges dirigés vers la surface extérieure de la préforme. Ce chauffage est avantageusement réglé pour éviter d'obtenir une différence de température entre l'intérieur et l'extérieur de la préforme trop importante.

Avantageusement, le présouffage de la préforme a lieu à une première pression comprise entre 4.10⁵ Pa et 10.10⁵ Pa (4 bars et 10 bars) pendant une période comprise entre 0,15 et 0,6 secondes.

Le second soufflage est réalisé sous une seconde pression comprise entre 3.10⁶. Pa et 4.10⁶ Pa (30 et 40 bars) pendant une seconde période comprise entre 0,3 et 2 secondes.

De manière connue, une tige d'étirage peut également être introduite dans la préforme pendant les opérations de pré-soufflage et/ou de soufflage pour étirer partiellement la préforme.

Les bouteilles ainsi obtenues sont réalisées avec des parois formées par une seule couche de matériau.

Elles ont un aspect esthétique blanc compatible pour le stockage de denrées alimentaires telles que le lait. D'autres couleurs peuvent être obtenues en associant aux charges de l'invention des pigments colorés qui peuvent être ajoutés dans le milieu de polymérisation ou mélangés aux granulés de PET avant fusion pour moulage par injection

Comme illustré ci-dessus, elles peuvent être obtenues selon des procédés conventionnels de fabrication de corps creux par injection soufflage.

En outre, ces bouteilles présentent des propriétés mécaniques permettant leur utilisation dans les procédés de remplissage à chaud, et les procédés comprenant une étape de stérilisation ou pasteurisation. Ces propriétés mécaniques sont également convenables pour le stockage des bouteilles par gerbage, quelque soit la température ambiante de stockage.

Les bouteilles ainsi obtenues présentent une transmission normale de la lumière très faible. Ainsi, après un stockage de lait UHT pendant 3 mois, le goût du lait n'a pas été altéré selon un panel de dégustateurs.

L'invention permet également de réaliser des bouteilles de différentes contenances et de formes diverses comme cela est déjà le cas pour les bouteilles translucides en polyester utilisées pour le stockage de denrées alimentaires, telles que l'eau.

D'autres avantages, détails de l'invention apparaîtront au vu des exemples donnés ci-dessous à titre d'illustration, sans caractère limitatif.

### Exemple 1

Les synthèses sont réalisées dans une installation discontinue constituée de deux réacteurs successifs, en acier inoxydable de 200 l chacun:

Le premier réacteur, équipé d'un système d'agitation vis / puit et d'une colonne permettant la séparation du glycol et de l'eau formée, permet de réaliser l'étape d'estérification, sous pression. Le second, équipé d'un système d'agitation vis / puit, permet de réaliser l'étape de polycondensation, sous vide progressif.

Dans cet exemple, la charge minérale utilisée est un oxyde de titane rutile commercialisé sous la référence 2220 par la société KRONOS. La concentration pondérale dans la composition obtenue est de 4%.

Le polyéthylène téréphtalate synthétisé contient 2.3% molaire de motifs isophtaliques c'est à dire que les monomères acides utilisés sont un mélange d'acide téréphtalique (PTA) et d'acide isophtalique (AIP) contenant 2,3 % en mole d'AIP.

Le rapport du nombre de moles d'éthylène glycol [EG] au nombre total de moles de diacides est de 1.20.

Le catalyseur utilisé pour la polycondensation est l'oxyde d'antimoine et sa concentration pondérale, exprimée en Sb, est de 250 ppm par rapport au poids de polymère théoriquement obtenu à partir de la masse des monomères engagés.

Matières premières utilisées :
- Acide téréphtalique (PTA) : 103.796 kg (624.99 moles)
- Acide isophtalique (AIP) : 2.444 kg (14.71 moles)
- Ethylène glycol (EG) : 47.616 kg (768 moles)
- TiO₂ Rutile (2220 de KRONOS): 5.340 kg
- Sb₂O₃ : 36.8 g

### Préparation de la charge minérale :

Dans un récipient inox, on introduit 35 kg de glycol (une partie des 47.616 kg indiqués ci-dessus), à température ambiante, puis, progressivement, sous agitation puissante, par exemple ultrasonique, les 5.340 kg d'oxyde de titane.

L'agitation est maintenue pendant 15 mn, après la fin de l'introduction de TiO₂.

La suspension glycolique de l'oxyde de titane est transférée dans le réacteur d'estérification contenant le complément de glycol (12.616 kg). Le mélange d'acide téréphtalique et d'acide isophtalique est ajouté sous agitation. Après purge du réacteur avec de l'azote, puis mise de celui-ci sous pression absolue de 6.6 bar d'azote, la température de la masse réactionnelle est progressivement portée de 25 à 260°C en 60 mn, de 260 à 270°C en 10 mn et enfin de 270°C à 285°C, en 40 mn.

La réaction d'estérification débute lorsque la température de la masse réactionnelle atteint 240°C environ.

Le taux de reflux de l'eau distillée est réglé pour que la température en tête de colonne reste à 167 - 168°C pendant toute cette étape d'estérification.

Quand la distillation de l'eau est terminée, la pression dans le réacteur est ramenée à la pression atmosphérique.

L'oxyde d'antimoine est ensuite introduit dans la masse réactionnelle.

Celle-ci est transférée dans le second réacteur de polycondensation, préalablement inerté à l'azote et chauffé à 280°C.

Sous agitation, la pression dans le réacteur est progressivement portée à 1 mbar. Parallèlement, la température de la masse réactionnelle est portée à 285°C.

La pression est ensuite maintenue entre 1 et 0.5 mbar environ .

La polycondensation est suivie par mesure du couple d'agitation.

La vitesse de cette agitation est progressivement diminuée, au fur et à mesure que la viscosité de la masse réactionnelle augmente.

La durée totale de polycondensation sous pression inférieure à 1 mbar est de 190 mn

En fin de polycondensation, le couple d'agitation atteint 81.6 mN .

Le polymère obtenu est coulé à travers une filière pour réaliser un jonc qui est débité sous forme de granulés.

### Exemple 2

L'exemple 1 est reproduit mais en doublant la masse de TiO₂ rutile 2220 pour obtenir une concentration pondérale égal à 8% dans la composition.

La durée totale de polycondensation sous pression inférieure à 1 mbar est de 180 mn

En fin de polycondensation, le couple d'agitation atteint 83.8 mN.

Le polymère obtenu est granulé selon les conditions indiquées dans l'exemple 1.

### Exemple 3

L'exemple 1 est reproduit mais en remplaçant le TiO₂ rutile par un TiO₂ de type anatase commercialisé par la société SACHTLEBEN sous la dénomination commerciale HOMBITAN LO CR S M, au même taux pondéral de 4%.

Les conditions de synthèse sont identiques à celles des exemples précédents.

La durée totale de polycondensation sous pression inférieure à 1 mbar est de 175 mn

En fin de polycondensation, le couple d'agitation atteint 92.5 mN .

Le polymère obtenu est granulé comme dans l'exemple 1.

### Exemple 4

L'exemple 3 est reproduit mais en doublant la masse de TiO₂ Hombitan LO CR S M de SACHTLEBEN pour obtenir une concentration de 8% en poids de TiO₂ dans la composition.

Les conditions de synthèse sont identiques à celles des exemples précédents.

La durée totale de polycondensation sous pression inférieure à 1 mbar est de 140 mn

En fin de polycondensation, le couple d'agitation atteint 97 mN.

Le polymère obtenu est granulé comme dans l'exemple 1.

Les caractéristiques des polymères obtenus sont rassemblées dans le tableau I :

**Tableau I**

| | | | | | |
|---|---|---|---|---|---|
| Exemple | | 1 | 2 | 3 | 4 |
| Charge TiO₂ | | 4% rutile | 8% rutile | 4% anatase | 8% anatase |
| Indice de viscosité | | 81.6 ml/g | 75.6 ml/g | 90.0 ml/g | 84.4 ml/g |
| Coloration | L* | 88.5 | 90.3 | 81.7 | 81.0 |
| | a* | 0.0 | 0.3 | -1.2 | -1.1 |
| | b* | 5.8 | 5.9 | 4.4 | 3.7 |

La coloration est déterminée par mesure avec un colorimètre MINOLTA CR310 selon la norme CIE L*a*b*.

Avant transformation, les granulés de polymères sont cristallisés par stockage sous vide pendant 16 h à 130°C.

Afin de vérifier le niveau d'opacification des différents polymères synthétisés, des films ont été réalisés par pressage de granulés, à chaud, l'épaisseur des films obtenus et caractérisés étant du même ordre de grandeur que celle de la paroi des bouteilles généralement injectées / soufflées

Les résultats obtenus en transmission résiduelle UV / visibles sont rassemblés dans le tableau II :

**Tableau II**

| | | | | | | |
|---|---|---|---|---|---|---|
| Exemple | | 1 | 2 | 3 | 4 | PET témoin, sans charge |
| Charge TiO2 | | 4% rutile | 8% rutile | 4% anatase | 8% anatase | |
| Epaisseur du film | | 310 µm | 330 µm | 340 µm | 340 µm | 320 µm |
| Seuil de coupure (*) | | 409 nm | 434 nm | 407 nm | 473 nm | 315 nm |
| Taux de transmission normale(%) à λ= | 300 nm | < 0.01 | < 0.01 | < 0.01 | < 0.01 | < 0.01 |
| | 400 nm | <0.01 | <0.01 | <0.01 | <0.01 | 33 |
| | 500 nm | 0.09 | 0.04 | 0.07 | 0.02 | 40 |
| | 600 nm | 0.12 | 0.06 | 0.12 | 0.05 | 44.5 |

| | | | | | | |
|---|---|---|---|---|---|---|
| (*) longueur d'onde (λ) en dessous de laquelle aucune transmission résiduelle n'est détectable c'est à dire inférieure à 0,01% | | | | | | |

Les transmissions résiduelles UV / visible des films obtenus ont été mesurées sur spectrophotomètre Perkin Elmer Lambda 9.

Ces essais montrent clairement le niveau très faible voir nul de la transmission normale des films obtenus avec les compositions de l'invention.

Ces résultats sont représentatifs de ceux qui sont obtenus avec les parois d'une bouteille réalisée avec une composition conforme aux exemples ci-dessus.

En outre, des bouteilles de 0,5 litre de contenance ont été réalisées avec les compositions des exemples 2 et 4. Ces bouteilles ont été remplies avec du lait selon la méthode UHT et conservées pendant 3 mois sous un éclairage de 300 Lux, représentatif de l'éclairage des magasins. Une dégustation du lait stocké a été organisée selon la procédure classique d'évaluation du goût. Le lait présente un goût non altéré c'est à dire « sans goût lumière ».

### Exemple 5

La synthèse de la composition conforme à l'invention est réalisée dans un réacteur discontinu de 7.5 L, en acier inoxydable.

Ce réacteur est équipé :
- d'un système d'agitation à double ruban hélicoïdal équipé d'un couplemètre permettant de suivre l'étape de polycondensation, par évaluation de la viscosité de la masse réactionnelle,
- d'une colonne permettant de séparer l'eau du glycol, lors de l'étape d'estérification.

Ce réacteur fonctionne sous pression, lors de l'étape d'estérification et sous pression réduite, lors de l'étape de polycondensation.

La charge minérale utilisée est de l'oxyde de titane anatase Hombitan LC-S, commercialisée par la société SACHTLEBEN. La concentration pondérale en oxyde de titane dans la composition obtenue est de 8%.

Le taux de motifs isophtaliques et le rapport molaire éthylène glycol / nombre total de moles diacides sont les mêmes que pour les exemples 1 à 4, de même que le taux d'oxyde d'antimoine employé.

Matières premières utilisées :
- Acide téréphtalique (PTA) : 2595 g (15.632 moles)
- Acide isophtalique (AIP) : 61.1 g (0.368 moles)
- Ethylène glycol (EG) : 1190 g (19.2 moles)
- TiO₂ Anatase (Hombitan LC-S) : 268 g
- Sb₂O₃ : 0.938 g

On prépare une suspension de la charge minérale par introduction, dans un bécher de 2 L, de 900g de glycol, à température ambiante, et sous agitation dans un homogénéiseur du type Ultra Turrax de 268 g de TiO₂. Le mélange est maintenu sous agitation pendant 3 mn.

La suspension glycolique de TiO₂ est ensuite introduite dans le réacteur d'estérification ainsi que le complément d'éthylène glycol.

Après purge du réacteur à l'azote, la pression est portée à 6.6 bar absolus d'azote.

La température est portée de 25 à 260°C en 50 mn, maintenue à 260°C pendant 30 mn et enfin progressivement portée à 280°C, en 50mn.

La réaction d'estérification commence lorsque la température de la masse réationnelle atteint 250°C environ.

Le taux de reflux dans la colonne est réglé de manière à maintenir une température en tête de colonne de 161 - 162°C.

Quand la distillation de l'eau provenant de l'estérification est terminée, la pression dans le réacteur est ramenée à la pression atmosphérique.

L'oxyde d'antimoine, préalablement solubilisé à 160°C dans 30 ml de glycol, est alors introduit à chaud dans la masse réactionnelle.

La pression dans le réacteur est progressivement portée à 0.7 mbar, en 80 mn.

Parallèlement, la température est portée à 285°C, en 50 mn, puis maintenue à cette température . La polycondensation est suivie par mesure du couple d'agitation, elle est arrêtée lorsque ce couple atteint 2.3 mN.

La durée de polycondensation est de 60 mn.

Le polymère obtenu est ensuite granulé par coulée sous forme d'un jonc dans un bac à eau et coupe du jonc dans un granulateur .

### Exemple 6

L'exemple 5 est reproduit mais en remplaçant l'oxyde de titane anatase Hombitan LC-S par de l'oxyde de titane anatase 1075 commercialisé par la société KRONOS, au même taux pondéral de 8% dans la composition finale.

Les conditions de synthèse sont identiques à celles de l'exemple 5.

La durée de polycondensation de 53 mn. Le polymère est granulé dans les mêmes conditions que dans l'exemple 5.

### Exemple 7

L'exemple 5 est reproduit mais en remplaçant l'oxyde de titane anatase Hombitan LC-S par de l' oxyde de titane anatase 1014 commercialisé par la société KRONOS, au même taux pondéral de 8%.

Les conditions de synthèse sont identiques à celles des exemples 5 et 6. La durée de polycondensation de 72 mn. Le polymère est granulé dans les mêmes conditions que dans l'exemple 5.

### Exemple 8

L'exemple 5 est reproduit mais en remplaçant l'oxyde de titane anatase Hombitan LC-S par de l' oxyde de titane anatase A-HRF commercialisé par la société HUNTSMAN, au même taux pondéral de 8%.

Les conditions de synthèse sont identiques à celles des exemples 5 à 7. La durée de polycondensation de 80 mn. Le polymère est granulé dans les mêmes condition que dans l'exemple 5.

### Exemple 9

L'exemple 5 est reproduit mais en remplaçant l'oxyde de titane anatase Hombitan LC-S par de l' oxyde de titane anatase A-PP2 commercialisé par la société HUNTSMAN, au même taux pondéral de 8%.

Les conditions de synthèse sont identiques à celles des exemples 5 à 8. La durée de polycondensation de 55 mn. Le polymère est granulé dans les mêmes conditions que dans l'exemple 5.

Les caractéristiques des polymères obtenus sont rassemblées dans le tableau III :

**Tableau III**

| | | | | | | |
|---|---|---|---|---|---|---|
| Exemple | | 5 | 6 | 7 | 8 | 9 |
| concentration pondérale d'oxyde de titane (*) | | 7.5% | 7.8% | 7.8% | 8.0% | 7.7% |
| Indice de viscosité | | 66.7 ml/g | 67.7 ml/g | 70.4 ml/g | 73.0 ml/g | 66.7 ml/g |
| Coloration | L* | 80.1 | 84.6 | 83.8 | 82.5 | 84.3 |
| | a* | 1.5 | 1.8 | 2.3 | 1.2 | 1.5 |
| | b* | 7.4 | 7.4 | 8.6 | 7.3 | 7.0 |

| | | | | | | |
|---|---|---|---|---|---|---|
| (*) Cette concentration est déterminée par mesure du taux de cendres, par pyrolyse de la composition à 800 - 850°C. | | | | | | |

Les résultats obtenus en transmission normale résiduelle UV / visible déterminée selon la méthode décrite pour les exemples 1 à 4, sont rassemblés dans le tableau IV :

**Tableau IV**

| | | | | | | |
|---|---|---|---|---|---|---|
| Exemple | | 5 | 6 | 7 | 8 | 9 |
| concentration pondérale d'oxyde de titane (*) | | 7.5% | 7.8% | 7.8% | 8.0% | 7.7% |
| Epaisseur du film | | 300 µm | 300 µm | 310 µm | 320 µm | 300 µm |
| Seuil de coupure | | 500 nm | 410 nm | 480 nm | 490 nm | 490 nm |
| Taux de transmission normale (%) à λ = | 400 nm | < 0.01 | < 0.01 | < 0.01 | < 0.01 | < 0.01 |
| | 500 nm | 0.02 | 0.04 | 0.02 | 0.02 | 0.02 |
| | 600 nm | 0.05 | 0.09 | 0.06 | 0.055 | 0.055 |
| | 700 nm | 0.09 | 0.13 | 0.10 | 0.095 | 0.095 |

### Exemple 10

Cet exemple décrit la réalisation de préformes et des bouteilles, en utilisant une composition conforme à l'invention obtenue par mélange d'un mélange maître à base PET contenant 60% d'oxyde de titane anatase Hombitan LO-CR-SM (de SACHTLEBEN) avec un polymère PET contenant 2.1% molaire de motifs isophtaliques et dont l'indice de viscosité est de 83 ml/g. Le rapport pondéral de mélange est de 13,3% de mélange maître et 86,7% de polyester. Les granulés de mélange-maitre et de résine polyester sont mélangés préalablement de manière homogène.

Les préformes sont fabriquées par utilisation d'une presse à injecter HUSKY LX 160T, comprenant un moule double empreinte avec une vis de diamètre 42 mm.

Les préformes obtenues ont un col de 28 mm. le temps de cycle est de 14.4 s

Les conditions d'injection sont les suivantes :
- Profil de température des zones de fusion dans le fourreau contenant la vis :270°C - 275°C - 275°C - 275°C - 275°C - 275°C - 275°C - 275°C - 275°C - 275°C
- Vitesse de la vis : 44% de la vitesse maximale autorisée par la machine
- Profil de température du pot d'injection :
   270°C - 270°C - 270°C
- Temps d'injection : 2.45 s
- Pression d'injection: 34 bar
- Température de l'eau de refroidissement : entrée : 4.2°C
   sortie : 4.8°C

Les préformes obtenues avec une composition contenant 8% en poids de TiO₂ présentent un poids de 27.7 g.

Les préformes sont soufflées sur une presse à injecter SIDEL SBO 1 équipée avec un moule pour bouteille de 500 ml et deux fours équipés de lampes infra-rouge successifs pour chauffer la préforme selon un profil de chauffage déterminé. Dans les essais ci-dessous, le premier four n'a pas été utilisé et les réglages des lampes du second four sont indiqués dans le tableau V ci-dessous.

Les conditions de soufflage mises en oeuvre sont indiquées dans le tableau V :

**tableau V**

| | | | |
|---|---|---|---|
| Cadence (bouteilles / h) | | | 1000 |
| Puissance lampes (second four) (%) | | 10 | 0 |
| | | 9 | 0 |
| | | 8 | 0 |
| | | 7 | 0 |
| | | 6 | 64 |
| | | 5 | 60 |
| | | 4 | 50 |
| | | 3 | 40 |
| | | 2 | 29 |
| | | 1 | 30 |
| Température apparente des préformes | | | 101°C |
| Pressions | Présoufflage | | 9 bar |
| | Soufflage | | 35 bar |
| Durée | Présoufflage | | 0.12 s |
| | Soufflage | | 1.45 s |
| | Dégazage | | 0.50 s |
| | Temps de cycle total | | 2.07 s |

L'épaisseur du corps des bouteilles obtenues est de 350 µm environ.

Les transmissions normales résiduelles UV / visible des bouteilles obtenues sont les suivantes :
- Epaisseur de la paroi : 345 µm
- Seuil de coupure : 440 nm
- Transmission normale résiduelle
   λ= 400 nm : < 0.01%
   λ= 500 nm : 0.015%
   λ= 600 nm : 0.03%
   λ= 700 nm : 0.045%

## Revendications

1. Procédé de fabrication d'articles monocouche, notamment pour emballage ou stockage de matières, **caractérisé en ce qu'**il consiste à mettre en forme une composition comprenant une matrice en polyester et :
- une seule charge minérale opacifiante formant un pigment blanc constituée par de l'oxyde de titane ou du sulfure de zinc, ou
- un mélange de charges minérales opacifiantes formant un pigment blanc constitué par de l'oxyde de titane et du sulfure de zinc,
la charge minérale ou le mélange de charges minérales étant présents à une concentration pondérale comprise entre 4 et 40 % par rapport au poids total de la composition, lesdits articles présentant un taux de transmission normale de la lumière inférieur à 0,25 %, pour des longueurs d'ondes comprises entre 350 et 550 nm et pour une épaisseur de paroi comprise entre 0,2 mm et 0,6mm.

2. Procédé selon la revendication 1, **caractérisé en ce que** l'oxyde de titane est choisi parmi les oxydes de titane sous forme rutile et/ou les oxydes de titane sous forme anatase.

3. Procédé selon la revendication 2, **caractérisé en ce que** l'oxyde de titane est sous forme de particules revêtues par une ou plusieurs couches protectrices.

4. Procédé selon l'une des revendications précédentes, **caractérisé en ce que** la concentration en charge opacifiante est comprise entre 4 et 20 % en poids.

5. Procédé selon l'une des revendications précédentes, **caractérisé en ce que** le taux de transmission de la lumière est inférieur à 0,1 %.

6. Procédé selon l'une des revendications précédentes, **caractérisé en ce que** le polyester est un polyéthylène téréphtalate ou polyéthylène naphtalate comprenant au moins 92,5 % en nombre de motifs récurrents éthylène téréphtalate ou éthylène naphtalate.

7. Procédé selon l'une des revendications précédentes, **caractérisé en ce que** la composition est obtenue par mélange d'une résine polyester avec un mélange maître comprenant au moins 30 % en poids de charge minérale formant le pigment blanc.

8. Procédé selon la revendication 7, **caractérisé en ce que** le mélange maître comprend une résine polyester comme matrice.

9. Procédé selon l'une des revendications précédentes, **caractérisé en ce que** les articles d'emballage sont sous forme de films, pièces moulées, profilés ou corps creux obtenus par injection-moulage, extrusion, pultrusion ou par injection-soufllage.

10. Procédé selon la revendication 9, **caractérisé en ce que** les corps creux sont des bouteilles obtenues par injection soufflage.

11. Articles d'emballage monocouche obtenus par le procédé selon l'une des revendications précédentes et présentant un taux de transmission normale de la lumière dans le domaine de longueurs d'ondes comprises entre 350 et 550 nm, inférieur à 0,25 %, de préférence inférieur à 0,1 %, pour une épaisseur de paroi comprise entre 0,2 mm et 0,6 mm.

12. Article selon la revendication 11, **caractérisé en ce que** l'article est une bouteille obtenue par injection-soufflage, la paroi du corps de la bouteille présentant un taux de transmission normale de la lumière dans le domaine de longueurs d'ondes comprises entre 350 et 550 nm, inférieur à 0,25 % pour une épaisseur de paroi comprise entre 0,2 mm et 0,6 mm.

13. Utilisation des articles selon la revendication 1,1 ou 12, pour le stockage du lait ou des produits laitiers.

## Claims

1. Process for manufacturing monolayer articles, in particular for packaging or storage of materials, **characterized in that** its consists in forming a composition comprising a polyester matrix and
- one opacifying mineral filler constituting a white pigment consisting of titanium oxide or zinc sulphide, or
- a mixture of opacifying mineral fillers constituting a white pigment consisting of titanium oxide and zinc sulphide,
the mineral filler or the mixture of mineral fillers being present with a weight concentration of between 4 % and 40 % relative to the total weight of the composition, said articles having a light normal transmission factor in the wavelength range between 350 and 550 nm, of less than 0.25 % for a wall thickness between 0.2 mm and 0.6 mm.

2. Process according to claim 1, **characterized in that** the titanium oxide is chosen from titanium oxides in rutile form and/or titanium oxides in anatase form.

3. Process according to claim 2, **characterized in that** the titanium oxide is in the form of particles coated with one or more protective layers.

4. Process according to one of the preceding claims, **characterized in that** the concentration of opacifying filler is between 4 and 20 % by weight.

5. Process according to one of the preceding claims, **characterized in that** the light normal transmission factor is less than 0.1 %.

6. Process according to one of the preceding claims, **characterized in that** the polyester is a polyethylene terephthalate or polyethylene naphthalate comprising at least 92.5 % by number of ethylene terephthalate or ethylene naphthalate repeat units.

7. Process according to one of the preceding claims, **characterized in that** the composition is obtained by mixing a polyester resin with a masterbatch comprising at least 30 % by weight of mineral filler constituting the white pigment.

8. Process according to claim 7, **characterized in that** the masterbatch comprises a polyester resin as matrix.

9. Process according to one of the preceding claims, **characterized in that** the packaging articles are in the form of films, moulded parts, extruded profiles or hollow bodies obtained by injection moulding, extrusion, pultrusion or injection-blow moulding.

10. Process according to claim 9, **characterized in that** hollow bodies are bottles obtained by injection-blow moulding.

11. Monolayer packaging articles obtained by the process according to one of the preceding claims and having a light normal transmission factor in the wavelength range lying between 350 and 550 nm, of less than 0.25 %, preferably less than 0.1 %, for a wall thickness between 0.2 mm and 0.6 mm.

12. Article according to claim 11, **characterized in that** the article is a bottle obtained by injection-blow moulding, the wall of the body of the bottle having a light normal transmission in the wavelength range from 350 to 550 nm, of less than 0.25 % for a wall thickness between 0.2 mm and 0.6 mm.

13. Use of the articles according to claim 11 or 12 for storing milk or dairy products.

## Patentansprüche

1. Verfahren zur Herstellung von einschichtigen Gegenständen, insbesondere zur Verpackung oder Aufbewahrung von Substanzen, **dadurch gekennzeichnet, dass** es darin besteht, eine Zusammensetzung zu formen, die eine Polyestermatrix und
- einen einzigen opak machenden mineralischen Füllstoff umfasst, der ein weißes Pigment bildet, und aus Titanoxid oder Zinksulfid besteht, oder
- eine Mischung von opak machenden mineralischen Füllstoffen, die ein weißes Pigment bilden, und aus Titanoxid und Zinksulfid besteht,
wobei der mineralische Füllstoff oder die Mischung von mineralischen Füllstoffen in einer Konzentration von 2 bis 40 Gew.-%, bezogen auf das Gesamtgewicht der Zusammensetzung, vorhanden ist, und die sogennanten Gegenstände einen Lichtdurchlässigkeitfaktor in senkrechter Richtung von weniger als 0,25 % für Wellenlängen zwischen 350 und 550 nm bei einer Wanddicke von 0,2 mm bis 0,6 mm aufweisen.

2. Verfahren nach Anspruch 1, **dadurch gekennzeichnet, dass** das Titanoxid als den Titanoxiden in Rutilform und/oder Titanoxiden in Anatasform ausgewählt ist.

3. Verfahren nach Anspruch 2, **dadurch gekennzeichnet, dass** das Titanoxid in Form von Teilchen vorliegt, die mit einer oder mehreren Schutzschichten beschichtet sind.

4. Verfahren nach einen der vorhergehenden Ansprüche, **dadurch gekennzeichnet, dass** die Konzentration des opak machenden mineralischen Füllstoff 4 bis 20 Gew.-% beträgt.

5. Verfahren nach einem der vorhergehenden Ansprüche, **dadurch gekennzeichnet, dass** der Lichtdurchlässigkeitfaktor weniger als 0,1 % ist.

6. Verfahren nach einem der vorhergehenden Ansprüche, **dadurch gekennzeichnet, dass** der Polyester ein Polyethylenterephthalat oder Polyethylennaphthtalat ist, das zahlenmäßig mindestens 92,5 % Ethylenterephthalat- oder Ethylennaphthalat-Wiederholungseinheiten umfasst.

7. Verfahren nach einem der vorhergehenden Ansprüche, **dadurch gekennzeichnet, dass** die Zusammensetzung durch Mischen eines Polyesterharzes mit einen Masterbatch, umfassend mindestens 30 Gew.-% von mineralischem Füllstoff, der das Weißpigment bildet, erhalten wird.

8. Verfahren nach Anspruch 7, **dadurch gekennzeichnet, dass** das Masterbatch ein Polyesterharz als Matrix umfasst.

9. Verfahren nach einem der vorhergehenden Ansprüche, **dadurch gekennzeichnet, dass** die Verpackungsgegenstände in Form von Folien, preßgeformten Stücken, Profilen oder Hohlkörpern vorliegen, die durch Spritzguss, Extrusion, Pultrusion oder durch Spritzblasen erhalten werden.

10. Verfahren nach Anspruch 9, **dadurch gekennzeichnet, dass** die Hohlkörper Flaschen sind, die durch Spritzblasen erhalten werden.

11. Einschichtiger Verpackungsgegenstand, der durch das Verfahren nach einem der vorhergehenden Ansprüche erhalten wird und einen Lichtdurchlässigkeitfaktor in senkrechter Richtung in dem Wellenlängenbereich von 350 bis 550 nm unter 0,25 %, vorzugsweise unter 0,1 % für eine Wanddicke von 0,2 mm bis 0,6 mm aufweist.

12. Gegenstand nach Anspruch 11, **dadurch gekennzeichnet, dass** der Gegenstand eine Flasche ist, die durch Spritzblasen erhalten wird, wobei die Wand des Körpers der Flasche einen Lichtdurchlässigkeitfaktor in senkrechter Richtung unter 0,25 % in dem Wellenlängenbereich von 350 bis 550 nm bei einer Wanddicke von 0,2 mm bis 0,6 mm aufweist.

13. Verwendung der Gegenstände nach Anspruch 11 oder 12 zur Aufbewahrung von Milch oder Milchprodukten.
